# EUROPEAN PATENT APPLICATION

(11) **EP 4 773 669 A1**
(43) Date of publication of application: **08.07.2026**
(21) Application number: 24870392.8
(22) Date of filing: 05.09.2024
(51) Int. Cl.: H04W 36/00

(54) **METHOD FOR TRANSMITTING RESERVATION STATE OF CELL FOR OPERATOR, AND COMMUNICATION APPARATUS**

(30) Priority: 27.09.2023 CN 202311274411
(71) Applicant: HUAWEI TECHNOLOGIES CO., LTD., Shenzhen 518129 (CN)
(72) Inventor: GE, Guoqing, Shenzhen, Guangdong 518129 (CN); LI, Zhengfeng, Shenzhen, Guangdong 518129 (CN); JIANG, Shenglong, Shenzhen, Guangdong 518129 (CN); ZHU, Wanli, Shenzhen, Guangdong 518129 (CN)
(74) Representative: MERH-IP Matias Erny Reichl Hoffmann Patentanwälte PartG mbB
(86) International application number: PCT/CN2024/117136
(87) International publication number: WO 2025/066846

(57) **Abstract**

This application provides a cell reserved for operator use transmission method and a communication apparatus. The method includes: A second access network device receives a first message sent by a first access network device, where the first message carries a state of a first cell reserved for operator use at a granularity of a public land mobile network PLMN, and the first cell is a cell of the first access network device. It can be learned that, according to the method, the second access network device can obtain, from the first access network device, a cell reserved for operator use of the first access network device at the granularity of a PLMN, so that the second access network device can make a communication decision based on the cell reserved for operator use of the first access network device at the granularity of a PLMN. This helps the second access network device make an appropriate communication decision.

## Description

This application claims priority to Chinese Patent Application No. 202311274411.5, filed with the China National Intellectual Property Administration on September 27, 2023 and entitled "CELL RESERVED FOR OPERATOR USE TRANSMISSION METHOD AND COMMUNICATION APPARATUS", which is incorporated herein by reference in its entirety.

### TECHNICAL FIELD

This application relates to the field of communication technologies, and in particular, to a cell reserved for operator use transmission method and a communication apparatus.

### BACKGROUND

Currently, in a system information block 1 (system information block 1, SIB1) of long term evolution (long term evolution, LTE) or new radio (new radio, NR), a cell reserved for operator use may be broadcast based on a public land mobile network (public land mobile network, PLMN). When a value of the cell reserved for operator use is reserved (reserved), it indicates that the cell is reserved for an operator. A terminal that is assigned to access control 11 (access control, AC11) or AC15 and runs in a home public land mobile network (home public land mobile network, HPLMN)/an equivalent home public land mobile network (equivalent home public land mobile network, EHPLMN) uses the cell as a candidate cell in a cell selection and reselection process. A terminal that is assigned to AC0 to AC9/AC12 to AC14 or a terminal that is assigned to AC11/AC15 but does not run in the HPLMN/EHPLMN considers the cell as a barred cell in a cell selection and reselection process. When the value of the cell reserved for operator use is not reserved (not reserved), it indicates that the cell is not reserved for the operator. In this case, all terminals use the cell as a candidate cell in a cell selection and reselection process.

Currently, in many communication scenarios, an access network device cannot make an appropriate communication decision. For example, in a cell handover scenario, a cell 1 of an access network device 1 is a serving cell of a terminal, and a cell 2 of an access network device 2 is a neighboring cell of the cell 1. An access type of the terminal is AC0. A value of a state of the cell 1 reserved for operator use is not reserved, and a value of a state of the cell 2 reserved for operator use is reserved. If signal quality of the cell 1 deteriorates, and signal quality of the cell 2 improves, the access network device 1 may make a decision of handing over the terminal from the cell 1 to the cell 2. Because the value of the state of the cell 2 reserved for operator use is reserved, and the access type of the terminal is AC0, the terminal cannot access the cell 2 when attempting to access the cell 2. The access network device 1 has to re-hand over the terminal to another neighboring cell with good signal quality. Consequently, the terminal cannot be handed over to an appropriate cell in time.

### SUMMARY

Embodiments of this application provide a cell reserved for operator use transmission method and a communication apparatus, to help an access network device make an appropriate communication decision.

According to a first aspect, this application provides a cell reserved for operator use transmission method. The method may be performed by a second access network device, or may be performed by a module (for example, a processor, a chip, or a chip system) used in the second access network device, or may be implemented by a logical node, a logical module, or software that can implement all or a part of functions of the second access network device. In the method, the second access network device receives a first message sent by a first access network device, where the first message carries a state of a first cell reserved for operator use at a granularity of a public land mobile network PLMN, and the first cell is a cell of the first access network device.

It can be learned that, according to the method described in the first aspect, the second access network device can obtain, from the first access network device, a cell reserved for operator use of the first access network device at the granularity of a PLMN, so that the second access network device can make a communication decision based on the cell reserved for operator use of the first access network device at the granularity of a PLMN. This helps the second access network device make an appropriate communication decision.

In a possible embodiment, that the second access network device receives the first message sent by the first access network device includes: The second access network device receives, through an X2/Xn link/a private link, the first message sent by the first access network device.

In a possible embodiment, before receiving the first message, the second access network device may further send a second message to the first access network device, where the second message is used to request a cell reserved for operator use.

Based on this possible embodiment, the second access network device can actively obtain, from the first access network device based on a requirement of the second access network device, the cell reserved for operator use of the first access network device at the granularity of a PLMN.

In a possible embodiment, after receiving the first message sent by the first access network device, the second access network device may further receive a third message sent by the first access network device, where the third message carries an updated state of the first cell reserved for operator use at the granularity of a PLMN.

Based on this possible embodiment, when the cell reserved for operator use of the first access network device at the granularity of a PLMN changes, the second access network device may be dynamically notified of the change. This helps reduce manual maintenance.

In a possible embodiment, the first message is one of the following messages: an X2 setup request message and an Xn setup request message, and the third message is one of the following messages: an ENB configuration update message and an NG-RAN node configuration update message.

Optionally, if the first message is an X2 setup request message, after receiving the first message, the second access network device may further send an X2 setup response (X2 setup response) message to the first access network device, where the X2 setup response message may carry a state of a second cell reserved for operator use at the granularity of a PLMN, and the second cell is a cell of the second access network device. Based on this optional embodiment, the first access network device and the second access network device may exchange the cell reserved for operator use, so that the first access network device and the second access network device each can make an appropriate communication decision.

Optionally, if the first message is an Xn setup request message, after receiving the first message, the second access network device may further send an Xn setup response (Xn setup response) message to the first access network device, where the Xn setup response message may carry a state of a second cell reserved for operator use at the granularity of a PLMN, and the second cell is a cell of the second access network device. Based on this optional embodiment, the first access network device and the second access network device may exchange the cell reserved for operator use, so that the first access network device and the second access network device each can make an appropriate communication decision.

In a possible embodiment, the second access network device may further perform cell shutdown based on the state of the first cell reserved for operator use at the granularity of a PLMN. This possible embodiment helps avoid a coverage hole.

In a possible embodiment, the second access network device may further perform cell handover on a terminal based on the state of the first cell reserved for operator use at the granularity of a PLMN. This possible embodiment helps hand over the terminal to an appropriate cell in time.

Optionally, the second access network device performs cell handover on the terminal based on the state of the first cell reserved for operator use at the granularity of a PLMN and access control information of the terminal. In this way, a cell handover policy can be made more accurately.

In a possible embodiment, the second access network device may further determine, based on the state of the first cell reserved for operator use at the granularity of a PLMN, whether to add a carrier of the first cell as a secondary component carrier SCC. This possible embodiment helps make the added SCC meet a control policy of an operator.

Optionally, the second access network device determines, based on the state of the first cell reserved for operator use at the granularity of a PLMN and the access control information of the terminal, whether to add the carrier of the first cell as the SCC. In this way, an SCC addition policy can be made more accurately.

According to a second aspect, this application provides a cell reserved for operator use transmission method. The method may be performed by a first access network device, or may be performed by a module (for example, a processor, a chip, or a chip system) used in the first access network device, or may be implemented by a logical node, a logical module, or software that can implement all or a part of functions of the first access network device. In the method, the first access network device sends a first message to a second access network device, where the first message carries a state of a first cell reserved for operator use at a granularity of a public land mobile network PLMN, and the first cell is a cell of the first access network device.

In a possible embodiment, that the first access network device sends the first message to the second access network device includes:
the first access network device sends the first message to the second access network device through an X2/Xn link/a private link.

In a possible embodiment, before the first access network device sends the first message to the second access network device, the method further includes:
the first access network device receives a second message sent by the second access network device, where the second message is used to request a cell reserved for operator use.

In a possible embodiment, after the first access network device sends the first message to the second access network device, the method further includes:
the first access network device sends a third message to the second access network device when the state of the first cell reserved for operator use at the granularity of a PLMN changes, where the third message carries an updated state of the first cell reserved for operator use at the granularity of a PLMN.

In a possible embodiment, the first message is one of the following messages: an X2 setup request message and an Xn setup request message, and the third message is one of the following messages: an ENB configuration update message and an NG-RAN node configuration update message.

Optionally, if the first message is an X2 setup request message, after sending the first message, the first access network device may further receive an X2 setup response (X2 setup response) message sent by the second access network device, where the X2 setup response message may carry a state of a second cell reserved for operator use at the granularity of a PLMN, and the second cell is a cell of the second access network device. Based on this optional embodiment, the first access network device and the second access network device may exchange the cell reserved for operator use, so that the first access network device and the second access network device each can make an appropriate communication decision.

Optionally, if the first message is an Xn setup request message, after sending the first message, the first access network device may further receive an Xn setup response (Xn setup response) message sent by the second access network device, where the Xn setup response message may carry a state of a second cell reserved for operator use at the granularity of a PLMN, and the second cell is a cell of the second access network device. Based on this optional embodiment, the first access network device and the second access network device may exchange the cell reserved for operator use, so that the first access network device and the second access network device each can make an appropriate communication decision.

For beneficial effect of the second aspect, refer to the beneficial effect of the first aspect. Details are not described herein.

According to a third aspect, this application provides a cell reserved for operator use transmission method. The method may be performed by a second access network device, or may be performed by a module (for example, a processor, a chip, or a chip system) used in the second access network device, or may be implemented by a logical node, a logical module, or software that can implement all or a part of functions of the second access network device. In the method, the second access network device receives a first message sent by a network management device, where the first message carries a state of a first cell reserved for operator use at a granularity of a PLMN, and the first cell is a cell of a first access network device. The second access network device receives a second message sent by the network management device, where the second message carries an updated state of the first cell reserved for operator use at the granularity of a PLMN.

It can be learned that, according to the method described in the third aspect, when a cell reserved for operator use of the first access network device at the granularity of a PLMN changes, the network management device may dynamically notify the second access network device of the change. This helps reduce manual maintenance.

In a possible embodiment, the second access network device may further perform cell shutdown based on the state of the first cell reserved for operator use at the granularity of a PLMN. This possible embodiment helps avoid a coverage hole.

In a possible embodiment, the second access network device may further perform cell handover on a terminal based on the state of the first cell reserved for operator use at the granularity of a PLMN. This possible embodiment helps hand over the terminal to an appropriate cell in time.

Optionally, the second access network device performs cell handover on the terminal based on the state of the first cell reserved for operator use at the granularity of a PLMN and access control information of the terminal. In this way, a cell handover policy can be made more accurately.

In a possible embodiment, the second access network device may further determine, based on the state of the first cell reserved for operator use at the granularity of a PLMN, whether to add a carrier of the first cell as a secondary component carrier SCC. This possible embodiment helps make the added SCC meet a control policy of an operator.

Optionally, the second access network device determines, based on the state of the first cell reserved for operator use at the granularity of a PLMN and the access control information of the terminal, whether to add the carrier of the first cell as the SCC. In this way, an SCC addition policy can be made more accurately.

According to a fourth aspect, this application provides a cell reserved for operator use transmission method. The method may be performed by a network management device, or may be performed by a module (for example, a processor, a chip, or a chip system) used in the network management device, or may be implemented by a logical node, a logical module, or software that can implement all or a part of functions of the network management device. In the method, the network management device sends a first message to a second access network device, where the first message carries a state of a first cell reserved for operator use at a granularity of a PLMN, and the first cell is a cell of a first access network device. The gateway device sends a second message to the second access network device when the state of the first cell reserved for operator use at the granularity of a PLMN changes, where the second message carries an updated state of the first cell reserved for operator use at the granularity of a PLMN.

In a possible embodiment, before sending the second message to the second access network device, the gateway device may further receive a third message sent by the first access network device, where the third message carries the updated state of the first cell reserved for operator use at the granularity of a PLMN.

For beneficial effect of the fourth aspect, refer to the beneficial effect of the third aspect. Details are not described herein.

According to a fifth aspect, this application provides a communication apparatus. For example, the communication apparatus may be a second access network device or a module used in the second access network device, for example, a processor, a chip, or a chip system, or may be a logical node, a logical module, or software that can implement all or a part of functions of the second access network device. The communication apparatus includes a module/unit configured to perform the method according to any one of the first aspect or the third aspect and the possible implementations of the first aspect or the third aspect.

According to a sixth aspect, this application provides a communication apparatus. For example, the communication apparatus may be a first access network device or a module used in the first access network device, for example, a processor, a chip, or a chip system, or may be a logical node, a logical module, or software that can implement all or a part of functions of the first access network device. The communication apparatus includes a module/unit configured to perform the method according to any one of the second aspect and the possible implementations of the second aspect.

According to a seventh aspect, this application provides a communication apparatus. For example, the communication apparatus may be a network management device or a module used in the network management device, for example, a processor, a chip, or a chip system, or may be a logical node, a logical module, or software that can implement all or a part of functions of the network management device. The communication apparatus includes a module/unit configured to perform the method according to any one of the fourth aspect and the possible implementations of the fourth aspect.

According to an eighth aspect, this application provides a communication apparatus, including a processor. The processor is coupled to a memory. The memory is configured to store a program or instructions. When the program or the instructions are executed by the processor, the apparatus is enabled to perform the method according to the first aspect, the second aspect, the third aspect, or the fourth aspect.

According to a ninth aspect, this application provides a chip. The chip includes a processor and an interface. The processor is coupled to the interface. The interface is configured to receive or output a signal. The processor is configured to execute code instructions, so that the chip performs the method according to the first aspect, the second aspect, the third aspect, or the fourth aspect.

According to a tenth aspect, this application provides a computer-readable storage medium. The computer-readable storage medium stores computer-executable instructions. When the computer-executable instructions are invoked, the method according to the first aspect, the second aspect, the third aspect, or the fourth aspect is performed.

According to an eleventh aspect, this application provides a computer program product. The computer program product includes computer program code. When the computer program code is run, the method according to the first aspect, the second aspect, the third aspect, or the fourth aspect is performed.

According to a twelfth aspect, this application provides a communication system. The communication system includes a communication apparatus (for example, a second access network device) configured to perform the method according to the first aspect and a communication apparatus (for example, a first access network device) configured to perform the method according to the second aspect.

According to a thirteenth aspect, this application provides a communication system. The communication system includes a communication apparatus (for example, a second access network device) configured to perform the method according to the third aspect and a communication apparatus (for example, a network management device) configured to perform the method according to the fourth aspect.

### BRIEF DESCRIPTION OF DRAWINGS

FIG. 1 is a diagram of a system architecture according to this application;
FIG. 2 is a schematic flowchart of a cell reserved for operator use transmission method according to this application;
FIG. 3 is a diagram of a cell reserved for operator use according to this application;
FIG. 4 is a diagram of a cell reserved for operator use according to this application;
FIG. 5 is a schematic flowchart of a cell reserved for operator use transmission method according to this application;
FIG. 6 is a schematic flowchart of a cell reserved for operator use transmission method according to this application;
FIG. 7 is a schematic flowchart of a cell reserved for operator use transmission method according to this application;
FIG. 8 is a diagram of a structure of a communication apparatus according to this application; and
FIG. 9 is a diagram of a structure of another communication apparatus according to this application.

### DESCRIPTION OF EMBODIMENTS

The following further describes specific embodiments of this application in detail with reference to accompanying drawings.

The terms "first", "second", and the like in the specification, claims, and accompanying drawings of this application are used to distinguish between different objects, but are not used to describe a specific sequence. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular feature, structure, or characteristic described with reference to the embodiment may be included in at least one embodiment of this application. The phrase shown in various locations in this specification may not necessarily refer to a same embodiment, and is not an independent or optional embodiment exclusive from another embodiment. It is explicitly and implicitly understood by persons skilled in the art that embodiments described in the specification may be combined with another embodiment.

In this application, "at least one piece (item)" means one or more, "a plurality of" means two or more, "at least two pieces (items)" means two or three or more, and "and/or" is used to describe an association relationship between associated objects, and indicates that three relationships may exist. For example, "A and/or B" may indicate: Only A exists, only B exists, and both A and B exist, where A and B may be singular or plural. The character "/" usually indicates an "or" relationship between associated objects. "At least one of the following items (pieces)" or a similar expression thereof means any combination of these items, including any combination of singular items (pieces) or plural items (pieces). For example, at least one item (piece) of a, b, or c may represent a, b, c, "a and b", "a and c", "b and c", or "a, b, and c", where a, b, and c may be singular or plural.

In this application, "sending information" may be understood as that a device sends information to another device, or may be understood as that a logical module in a device sends information to another logical module. For example, "an access network device sends information" may be understood as that the access network device sends information to another device (for example, a terminal), or may be understood as that a logical module 1 in the access network device sends information to a logical module 2 in the access network device.

In this application, "receiving information" may be understood as that a device receives information from another device, or may be understood as that a logical module in the device receives information from another logical module. For example, "an access network device receives information" may be understood as that the access network device receives information from another device (for example, a terminal), or may be understood as that a logical module 1 in the access network device receives information from a logical module 2 in the access network device.

In this application, "sending information to... (for example, a terminal)" or a related illustration in the accompanying drawings may be understood as that a destination of the information is the terminal, and may include directly or indirectly sending the information to the terminal. "Receiving information from... (for example, a terminal)" or "receiving information that is from... (for example, a terminal)" or "receiving information sent by (for example, a terminal)" or a related diagram in the accompanying drawings may be understood as that a source of the information is the terminal, and may include directly or indirectly receiving information from the terminal. Information may undergo necessary processing, for example, a format change, between a source end for sending the information and a destination end. However, the destination end may understand valid information from the source end. A similar expression in this application may be understood similarly, and details are not described herein again.

To help an access network device make an appropriate communication decision, embodiments of this application provide a cell reserved for operator use transmission method and a communication apparatus.

To better understand embodiments of this application, the following first describes a system architecture in embodiments of this application.

Embodiments of this application may be applied to a wireless communication system like a long term evolution (long term evolution, LTE) system, a 5th generation mobile communication (5th generation mobile communication, 5G) system, a communication system evolved after 5G, for example, a 6th generation mobile communication (6th generation mobile communication, 6G) system, a satellite communication system, or a short-range communication system. The wireless communication system mentioned in embodiments of this application includes but is not limited to three application scenarios of the 5G/6G mobile communication system: enhanced mobile broadband (enhanced mobile broadband, eMBB), ultra-reliable low-latency communication (ultra-reliable low-latency communication, URLLC), massive machine-type communication (massive machine-type communication, mMTC), a long range (long range, LoRa) internet of things system, or an internet of vehicles system. The wireless communication system may include one or more access network devices and one or more terminals.

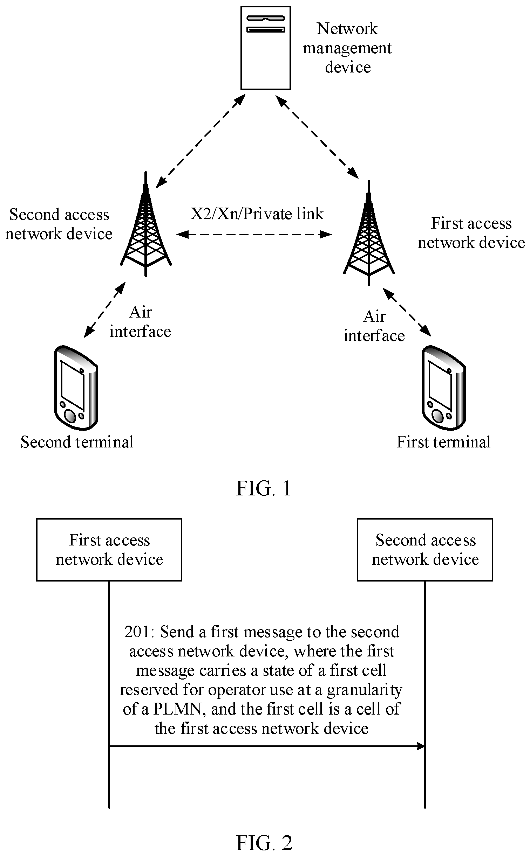

FIG. 1 is a diagram of a possible and non-limiting system. As shown in FIG. 1, a communication system includes a first access network device, a second access network device, a first terminal, a second terminal, and a network management device. The network management device is connected to the first access network device and the second access network device. The first access network device communicates with the first terminal through an air interface. The second access network device communicates with the second terminal through an air interface. The first access network device and the second access network device may communicate with each other through an X2/Xn link. Optionally, the first access network device and the second access network device may alternatively communicate with each other through a link other than X2/Xn, for example, communicate with each other through a private link. The private link is a set of link manners that are not specified in a protocol and that are set up between access network devices. A current protocol is X2 or Xn, and some control information may also be exchanged between private links. In FIG. 1, an example in which the first access network device and the second access network device communicate with each other through the X2/Xn link is used. In FIG. 1, two access network devices and two terminals are used as an example. The communication system may further include more access network devices and terminals. This is not limited in embodiments of this application.

### 1. Access network device

The access network device sometimes may also be referred to as an access network node, an access network entity, an access node, or the like, and constitutes a part of a communication system, to help a terminal implement wireless access. In a possible scenario, the access network device may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6th generation (6th generation, 6G) mobile communication system, a base station in a future mobile communication system, an access node in a Wi-Fi system, or the like. The access network device may be a macro base station, a micro base station, an indoor base station, a relay node, a donor node, or a radio controller in a CRAN scenario. In a possible embodiment, the access network device may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the access network device in this application may alternatively be implemented by using a software function running on hardware, or may be implemented by using a virtualization function instantiated on a platform (for example, a cloud platform). The access network device in this application may alternatively be a logical node, a logical module, or software that can implement all or a part of the functions of the access network device.

In another possible scenario, a plurality of access network devices cooperate to assist the terminal in implementing radio access, and different access network devices respectively implement a part of functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but persons skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

In embodiments of this application, a form of the access network device is not limited. An apparatus configured to implement a function of the access network device may be an access network device, or may be an apparatus that can support the access network device in implementing the function, for example, a chip system. The apparatus may be installed in the access network device or used in cooperation with the access network device.

### (2) Terminal

The terminal may alternatively be referred to as a terminal device, a user equipment (user equipment, UE), a mobile station, a mobile terminal, or the like. The terminal may be widely used in various scenarios, for example, a device-to-device (device-to-device, D2D) scenario, a vehicle to everything (vehicle to everything, V2X) communication scenario, a machine-type communication (machine-type communication, MTC) scenario, an internet of things (internet of things, IOT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like.

In embodiments of this application, a form of the terminal is not limited. An apparatus configured to implement a function of the terminal may be the terminal, or may be an apparatus that can support the terminal in implementing the function, for example, a chip system. The apparatus may be installed in the terminal or used in cooperation with the terminal.

### 3. Network management device

The network management device is a network device used for wireless network deployment, maintenance and optimization, and service delivery, and mainly implements a function of centralized maintenance and management of access network devices and network elements.

To facilitate understanding of content of this solution, the following further explains and describes some terms in embodiments of this application, so as to facilitate understanding by persons skilled in the art. This part is merely for ease of understanding, and cannot be considered as a disclosure or a specific limitation on the technical solutions of this application.

### 1. Cell reserved for operator use (cell reserved for operator use)

When a value of the cell reserved for operator use is reserved, it indicates that the cell is reserved for an operator. A terminal that is assigned to AC11 or AC15 and runs in an HPLMN/EHPLMN uses the cell as a candidate cell in a cell selection and reselection process. A terminal that is assigned to AC0 to AC9/AC12 to AC14 or a terminal that is assigned to AC11/AC15 but does not run in the HPLMN/EHPLMN considers the cell as a barred cell in a cell selection and reselection process. When the value of the cell reserved for operator use is not reserved, it indicates that the cell is not reserved for the operator. In this case, all terminals use the cell as a candidate cell in a cell selection and reselection process.

Currently, in a system message SIB1 of LTE or NR, the cell reserved for operator use may be broadcast based on a PLMN. For example, in the LTE, cell access related information (CellAccessRelatedInfo) of the SIB1 includes a PLMN identity list (PLMN-IdentityList). The PLMN-IdentityList includes one or more pieces of PLMN identity information (PLMN-IdentityInfo), and each piece of PLMN-IdentityInfo includes one PLMN-Identity and cellReservedForOperatorUse. For example, PLMN-IdentityList and PLMN-IdentityInfo are as follows:

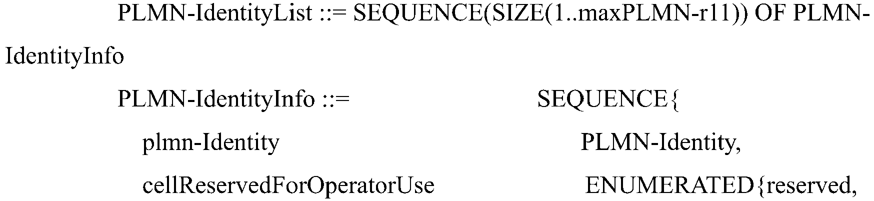

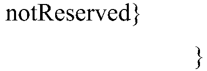

For another example, in the NR, cell access related information (CellAccessRelatedInfo) of the SIB 1 includes a PLMN identity information list (PLMN-IdentityInfoList). The PLMN-IdentityInfoList includes one or more pieces of PLMN-IdentityInfo, and each piece of PLMN-IdentityInfo includes one PLMN-IdentityList and cellReservedForOperatorUse. For example, PLMN-IdentityInfoList and PLMN-IdentityInfo are as follows:

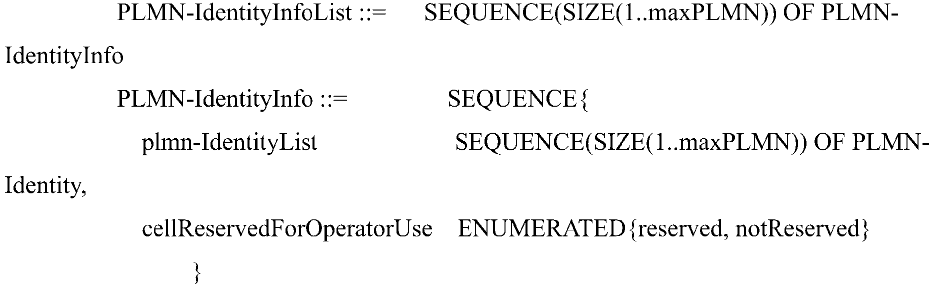

### 2. Access control (access control, AC)

The access control is used by an operator to control a network in emergencies. In some special cases, the operator expects to bar all or a part of terminals from sending access requests or paging response requests in some special areas. Therefore, an access class is usually allocated to each user.

The access control is classified into 15 types based on users. Access classes 0 to 9 are used for common users. An access class 11 is used for PLMN management. An access class 12 is used for security services. An access class 13 is used for public utilities. An access class 14 is used for emergency services. An access class 15 is used for PLMN staff. For the users in the access classes 0 to 9, access rights of the users are applicable to an HPLMN and a visited public land mobile network (Visited PLMN, VPLMN). For users in the access classes 11 and 15, access rights of the users are applicable to the HPLMN only when an EHPLMN list does not exist or there is no EHPLMN. For users in the access classes 12, 13, and 14, access rights of the users are applicable to an HPLMN and a VPLMN of a home country. Therefore, the home country is defined as a country in an MCC part of the IMSI.

The following further describes, with reference to the accompanying drawings, the cell reserved for operator use transmission method and the communication apparatus. It may be understood that, in this application, an example in which a first access network device and a second access network device are used as execution bodies for an interaction example is used for description. However, the execution bodies of the interaction example are not limited in this application. For example, the access network device in the method provided in this application may alternatively be a chip, a chip system, or a processor used in the access network device, or may be a logical node, a logical module, or software that can implement all or a part of the access network device.

FIG. 2 is a schematic flowchart of a cell reserved for operator use transmission method according to an embodiment of this application.

201: A first access network device sends a first message to a second access network device, where the first message carries a state of a first cell reserved for operator use at a granularity of a PLMN, and the first cell is a cell of the first access network device. Correspondingly, the second access network device may receive the first message.

In this embodiment of this application, after receiving the first message, the second access network device may make a communication decision based on the state of the first cell reserved for operator use at the granularity of a PLMN.

In this embodiment of this application, there is a neighbor relationship between a cell of the first access network device and a cell of the second access network device.

In this embodiment of this application, the first message may carry a state of a part of cells of the first access network device that are reserved for operator use. Alternatively, the first message may carry states of all cells of the first access network device that are reserved for operator use.

In this embodiment of this application, the state of the first cell reserved for operator use that is carried in the first message is at the granularity of a PLMN. In other words, for the first cell, states of the first cell reserved for operator use in different PLMNs are separately indicated.

For example, it is assumed that the first cell supports a PLMN 1 and a PLMN 2. In this case, the first message may carry a state of the first cell reserved for operator use in the PLMN 1 and a state of the first cell reserved for operator use in the PLMN 2. After receiving the first message, the second access network device may distinguish between states of the first cell reserved for operator use in different PLMNs.

In a possible embodiment, the first access network device may send the first message to the second access network device through an X2/Xn link. Correspondingly, the second access network device may receive, through the X2/Xn link, the first message sent by the first access network device.

Optionally, the first message may be a message specified in protocol of the X2/Xn link or a private message.

In another possible embodiment, the first access network device may send the first message to the second access network device through a link other than the X2/Xn link. Correspondingly, the second access network device may receive, through the link other than the X2/Xn link, the first message sent by the first access network device. For example, the first access network device may send the first message to the second access network device through a private link. Correspondingly, the second access network device may receive, through the private link, the first message sent by the first access network device.

In a possible embodiment, the second access network device may further perform cell shutdown based on the state of the first cell reserved for operator use at the granularity of a PLMN. This possible embodiment helps avoid a coverage hole.

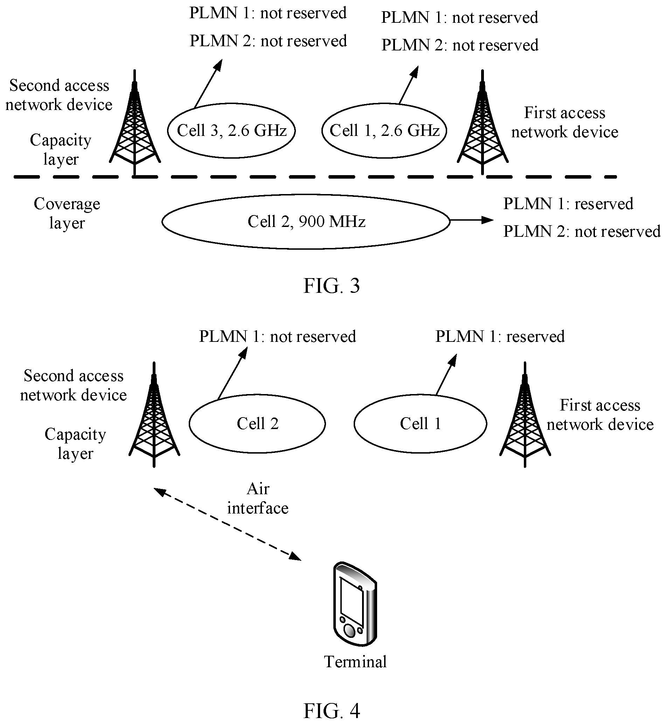

For example, as shown in FIG. 3, the first access network device has a cell 1 and a cell 2, and the second access network device has a cell 3. The cell 1 and the cell 3 are capacity-layer cells, with an operating frequency of 2.6 GHz (gigahertz). The cell 2 is a coverage-layer cell, with an operating frequency of 900 MHz (megahertz). A state of the cell 1 reserved for operator use in the PLMN 1 is not reserved (not reserved). A state of the cell 1 reserved for operator use in the PLMN 2 is not reserved. A state of the cell 2 reserved for operator use in the PLMN 1 is reserved (reserved). A state of the cell 2 reserved for operator use in the PLMN 2 is not reserved. A state of the cell 3 reserved for operator use in the PLMN 1 is not reserved. A state of the cell 3 reserved for operator use in the PLMN 2 is not reserved. If the second access network device shuts down the capacity-layer cell 3 for energy saving, coverage on a common user of the PLMN 1 is lost in a coverage area of the cell 3, causing a coverage hole.

To resolve this problem, in this embodiment of this application, after receiving a cell reserved for operator use of the first access network device at the granularity of a PLMN, the second access network device may perform cell shutdown based on the cell reserved for operator use of the first access network device at the granularity of a PLMN. For example, if the second access network device finds that the state of the cell 3 reserved for operator use in the PLMN 1 is inconsistent with the state of the cell 2 reserved for operator use in the PLMN 1, the second access network device may not shut down the cell 3, to avoid the coverage hole. Alternatively, if the second access network device finds that the state of the cell 3 reserved for operator use in the PLMN 1 is not reserved, and the state of the cell 2 reserved for operator use in the PLMN 1 is reserved, the second access network device may not shut down the cell 3, to avoid the coverage hole.

In a possible embodiment, the second access network device may further perform cell handover on a terminal based on the state of the first cell reserved for operator use at the granularity of a PLMN. This possible embodiment helps hand over the terminal to an appropriate cell in time.

For example, as shown in FIG. 4, the first access network device has a cell 1, and the second access network device has a cell 2. A state of the cell 1 reserved for operator use in the PLMN 1 is reserved. A state of the cell 2 reserved for operator use in the PLMN 1 is not reserved. In a cell handover scenario, the cell 2 is a serving cell of the terminal, and the cell 1 is a neighboring cell of the cell 2. An access type of the terminal is AC0. If signal quality of the cell 2 deteriorates, and signal quality of the cell 1 improves, the second access network device may make a decision of handing over the terminal from the cell 2 to the cell 1. Because a value of the state of the cell 1 reserved for operator use is reserved, and the access type of the terminal is AC0, the terminal cannot access the cell 1 when attempting to access the cell 1. Consequently, the terminal cannot be handed over to an appropriate cell in time.

To resolve this problem, in this embodiment of this application, after receiving a cell reserved for operator use of the first access network device at the granularity of a PLMN, the second access network device may perform cell handover on the terminal based on the cell reserved for operator use of the first access network device at the granularity of a PLMN. For example, if the second access network device finds that the state of the cell 2 reserved for operator use in the PLMN 1 is inconsistent with the state of the cell 1 reserved for operator use in the PLMN 1, the second access network device does not hand over the terminal to the cell 1. Alternatively, if the second access network device finds that the state of the cell 2 reserved for operator use in the PLMN 1 is not reserved, and the state of the cell 1 reserved for operator use in the PLMN 1 is reserved, the second access network device does not hand over the terminal to the cell 1.

Optionally, the second access network device performs cell handover on the terminal based on the state of the first cell reserved for operator use at the granularity of a PLMN and access control information of the terminal. In this way, a cell handover policy can be made more accurately.

For example, if the second access network device finds that the state of the cell 2 reserved for operator use in the PLMN 1 is not reserved, the state of the cell 1 reserved for operator use in the PLMN 1 is reserved, and the access control information of the terminal is not AC11 or AC15, the second access network device does not hand over the terminal to the cell 1.

In a possible embodiment, the second access network device may further determine, based on the state of the first cell reserved for operator use at the granularity of a PLMN, whether to add a carrier of the first cell as a secondary component carrier (secondary component carrier, SCC). This possible embodiment helps make the added SCC meet a control policy of an operator.

For example, as shown in FIG. 4, the first access network device has a cell 1, and the second access network device has a cell 2. A state of the cell 1 reserved for operator use in the PLMN 1 is reserved. A state of the cell 2 reserved for operator use in the PLMN 1 is not reserved. In a carrier aggregation scenario, a carrier of the cell 2 is a primary carrier. When the second access network device adds a carrier corresponding to the cell 1 as an SCC, if the access type of the terminal is not AC11 or AC15, the terminal cannot use the SCC. Therefore, if the second access network device adds the carrier corresponding to the cell 1 as the SCC, the control policy of the operator may not be met.

To resolve this problem, the second access network device may determine, based on the state of the cell 1 reserved for operator use in the PLMN 1, whether to add the carrier of the cell 1 as the SCC. For example, if the state of the cell 2 reserved for operator use in the PLMN 1 is inconsistent with the state of the cell 1 reserved for operator use in the PLMN 1, the second access network device does not add the carrier of the cell 1 as the SCC. Alternatively, if the state of the cell 2 reserved for operator use in the PLMN 1 is not reserved, and the state of the cell 1 reserved for operator use in the PLMN 1 is reserved, the second access network device does not add the carrier of the cell 1 as the SCC.

Optionally, the second access network device determines, based on the state of the first cell reserved for operator use at the granularity of a PLMN and the access control information of the terminal, whether to add the carrier of the first cell as the SCC. In this way, an SCC addition policy can be made more accurately.

For example, if the second access network device finds that the state of the cell 2 reserved for operator use in the PLMN 1 is not reserved, the state of the cell 1 reserved for operator use in the PLMN 1 is reserved, and the access control information of the terminal is not AC11 or AC15, the second access network device does not add the carrier of the first cell as the SCC.

It can be learned that, according to the method described in FIG. 2, the second access network device can obtain, from the first access network device, the cell reserved for operator use of the first access network device at the granularity of a PLMN, so that the second access network device can make a communication decision based on the cell reserved for operator use of the first access network device at the granularity of a PLMN. This helps the second access network device make an appropriate communication decision.

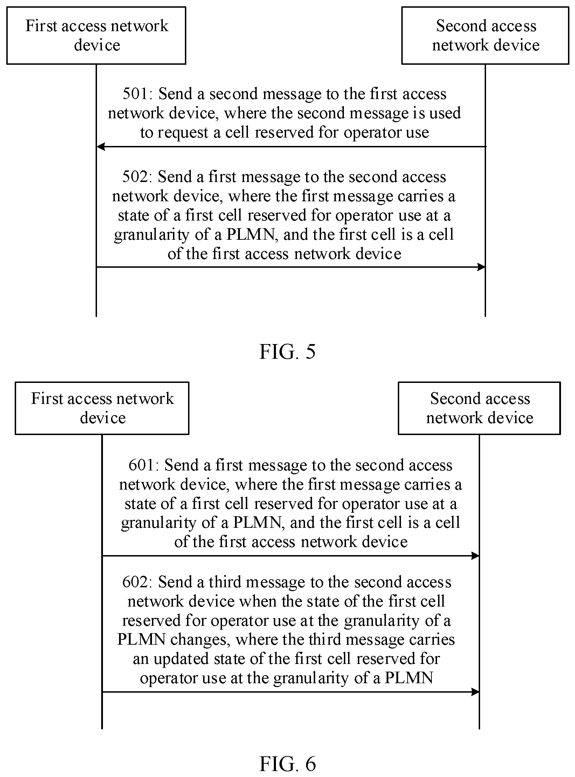

FIG. 5 is a schematic flowchart of a cell reserved for operator use transmission method according to an embodiment of this application.

501: A second access network device may send a second message to a first access network device, where the second message is used to request a cell reserved for operator use. Correspondingly, the first access network device may receive the second message, and send a first message to the second access network device based on the second message

502: The first access network device sends the first message to the second access network device, where the first message carries a state of a first cell reserved for operator use at a granularity of a PLMN, and the first cell is a cell of the first access network device. Correspondingly, the second access network device may receive the first message.

For a specific implementation of step 502, refer to the descriptions of step 201. Details are not described herein again. After the second access network device receives the first message, for an operation that may be performed by the second access network device, refer to the descriptions of the embodiment corresponding to FIG. 2. Details are not described herein again.

In other words, the second access network device may actively request, from the first access network device based on a requirement of the second access network device, the cell reserved for operator use.

In another possible embodiment, the first access network device may alternatively actively send the first message to the second access network device.

It can be learned that, according to the method described in FIG. 5, the second access network device can actively obtain, from the first access network device based on the requirement of the second access network device, a cell reserved for operator use of the first access network device at the granularity of a PLMN, so that the second access network device can make a communication decision based on the cell reserved for operator use of the first access network device at the granularity of a PLMN. This helps the second access network device make an appropriate communication decision.

FIG. 6 is a schematic flowchart of another cell reserved for operator use transmission method according to an embodiment of this application.

601: A first access network device sends a first message to a second access network device, where the first message carries a state of a first cell reserved for operator use at a granularity of a PLMN, and the first cell is a cell of the first access network device. Correspondingly, the second access network device may receive the first message.

For a specific implementation of step 601, refer to the descriptions of step 201. Details are not described herein again. After the second access network device receives the first message, for an operation that may be performed by the second access network device, refer to the descriptions of the embodiment corresponding to FIG. 2. Details are not described herein again.

602: The first access network device sends a third message to the second access network device when the state of the first cell reserved for operator use at the granularity of a PLMN changes, where the third message carries an updated state of the first cell reserved for operator use at the granularity of a PLMN. Correspondingly, the second access network device may receive the third message.

For example, it is assumed that the first cell supports a PLMN 1 and a PLMN 2. A reserved state of the first cell in the PLMN 1 that is carried in the first message is reserved, and a reserved state of the first cell in the PLMN 2 that is carried in the first message is reserved. If the state of the first cell reserved for operator use in the PLMN 1 changes to not reserved, and the state of the first cell reserved for operator use in the PLMN 2 changes to not reserved, the first access network device sends the third message to the second access network device, where the reserved state of the first cell in the PLMN 1 that is carried in the third message is not reserved, and the reserved state of the first cell in the PLMN 2 that is carried in the third message is not reserved.

Optionally, the third message carries a changed reserved state of the first cell in the PLMN, and an unchanged reserved state of the first cell in the PLMN may not be carried.

For example, it is assumed that the first cell supports a PLMN 1 and a PLMN 2. A reserved state of the first cell in the PLMN 1 that is carried in the first message is reserved, and a reserved state of the first cell in the PLMN 2 that is carried in the first message is reserved. If the state of the first cell reserved for operator use in the PLMN 1 changes to not reserved, and the state of the first cell reserved for operator use in the PLMN 2 does not change, the first access network device sends the third message to the second access network device, where the reserved state of the first cell in the PLMN 1 that is carried in the third message is not reserved.

Optionally, the third message carries latest reserved states of the first cell in all PLMNs.

For example, it is assumed that the first cell supports a PLMN 1 and a PLMN 2. A reserved state of the first cell in the PLMN 1 that is carried in the first message is reserved, and a reserved state of the first cell in the PLMN 2 that is carried in the first message is reserved. If the state of the first cell reserved for operator use in the PLMN 1 changes to not reserved, and the state of the first cell reserved for operator use in the PLMN 2 does not change, the first access network device sends the third message to the second access network device, where the reserved state of the first cell in the PLMN 1 that is carried in the third message is not reserved, and the reserved state of the first cell in the PLMN 2 that is carried in the third message is reserved.

In a possible embodiment, the first message is one of the following messages: an X2 setup request (X2 setup request) message and an Xn setup request (Xn setup request) message, and the third message is one of the following messages: an ENB configuration update (ENB configuration update) message and an NG-RAN node configuration update (NG-RAN node configuration update) message.

Optionally, if the first message is an X2 setup request message, after receiving the first message, the second access network device may further send an X2 setup response (X2 setup response) message to the first access network device, where the X2 setup response message may carry a state of a second cell reserved for operator use at the granularity of a PLMN, and the second cell is a cell of the second access network device. Correspondingly, the first access network device may receive the X2 setup response message. Based on this optional embodiment, the first access network device and the second access network device may exchange the cell reserved for operator use, so that the first access network device and the second access network device each can make an appropriate communication decision.

Optionally, if the first message is an Xn setup request message, after receiving the first message, the second access network device may further send an Xn setup response (Xn setup response) message to the first access network device, where the Xn setup response message may carry a state of a second cell reserved for operator use at the granularity of a PLMN, and the second cell is a cell of the second access network device. Correspondingly, the first access network device may receive the Xn setup response message. Based on this optional embodiment, the first access network device and the second access network device may exchange the cell reserved for operator use, so that the first access network device and the second access network device each can make an appropriate communication decision.

In a possible embodiment, the first message and the third message may alternatively be messages specified in another protocol of an X2 or Xn link.

In a possible embodiment, the first message and the third message may alternatively be private messages of the X2 or Xn link, for example, ENB private configuration update and Xn private configuration update.

In a possible embodiment, the first message and the third message may alternatively be messages of a private link.

It can be learned that, according to the method described in FIG. 6, when the cell reserved for operator use of the first access network device at the granularity of a PLMN changes, the second access network device may be dynamically notified of the change. This helps reduce manual maintenance.

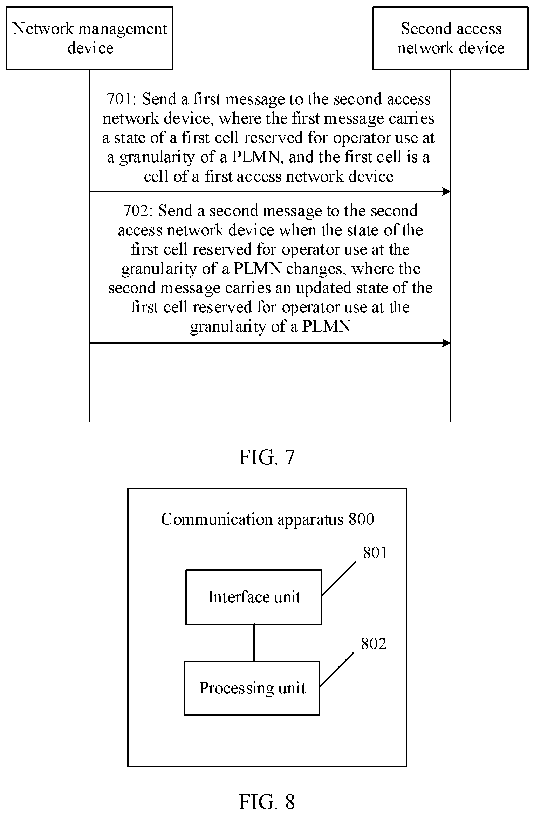

FIG. 7 is a schematic flowchart of a cell reserved for operator use transmission method according to an embodiment of this application.

701: A network management device sends a first message to a second access network device, where the first message carries a state of a first cell reserved for operator use at a granularity of a PLMN, and the first cell is a cell of a first access network device. Correspondingly, the second access network device may receive the first message.

In this embodiment of this application, after receiving the first message, the second access network device may make a communication decision based on the state of the first cell reserved for operator use at the granularity of a PLMN.

In this embodiment of this application, there is a neighbor relationship between a cell of the first access network device and a cell of the second access network device.

In this embodiment of this application, the first message may carry a state of a part of cells of the first access network device that are reserved for operator use. Alternatively, the first message may carry states of all cells of the first access network device that are reserved for operator use.

In this embodiment of this application, the state of the first cell reserved for operator use that is carried in the first message is at the granularity of a PLMN. In other words, for the first cell, states of the first cell reserved for operator use in different PLMNs are separately indicated.

For example, it is assumed that the first cell supports a PLMN 1 and a PLMN 2. In this case, the first message may carry a state of the first cell reserved for operator use in the PLMN 1 and a state of the first cell reserved for operator use in the PLMN 2. After receiving the first message, the second access network device may distinguish between states of the first cell reserved for operator use in different PLMNs.

In a possible embodiment, the second access network device may further perform cell shutdown based on the state of the first cell reserved for operator use at the granularity of a PLMN. This possible embodiment helps avoid a coverage hole.

For related descriptions of the possible embodiment, refer to the descriptions of the embodiment corresponding to FIG. 2. Details are not described herein again.

In a possible embodiment, the second access network device may further perform cell handover on a terminal based on the state of the first cell reserved for operator use at the granularity of a PLMN. This possible embodiment helps hand over the terminal to an appropriate cell in time.

For related descriptions of the possible embodiment, refer to the descriptions of the embodiment corresponding to FIG. 2. Details are not described herein again.

Optionally, the second access network device performs cell handover on the terminal based on the state of the first cell reserved for operator use at the granularity of a PLMN and access control information of the terminal. In this way, a cell handover policy can be made more accurately.

For related descriptions of the optional embodiment, refer to the descriptions of the embodiment corresponding to FIG. 2. Details are not described herein again.

In a possible embodiment, the second access network device may further determine, based on the state of the first cell reserved for operator use at the granularity of a PLMN, whether to add a carrier of the first cell as a secondary component carrier (secondary component carrier, SCC). This possible embodiment helps make the added SCC meet a control policy of an operator.

For related descriptions of the possible embodiment, refer to the descriptions of the embodiment corresponding to FIG. 2. Details are not described herein again.

Optionally, the second access network device determines, based on the state of the first cell reserved for operator use at the granularity of a PLMN and the access control information of the terminal, whether to add the carrier of the first cell as the SCC. In this way, an SCC addition policy can be made more accurately.

For related descriptions of the optional embodiment, refer to the descriptions of the embodiment corresponding to FIG. 2. Details are not described herein again.

702: The gateway device sends a second message to the second access network device when the state of the first cell reserved for operator use at the granularity of a PLMN changes, where the second message carries an updated state of the first cell reserved for operator use at the granularity of a PLMN. Correspondingly, the second access network device may receive the second message.

In other words, when a cell reserved for operator use of the first access network device at the granularity of a PLMN changes, the network management device may dynamically notify the second access network device of the change.

For example, it is assumed that the first cell supports a PLMN 1 and a PLMN 2. A reserved state of the first cell in the PLMN 1 that is carried in the first message is reserved, and a reserved state of the first cell in the PLMN 2 that is carried in the first message is reserved. If the state of the first cell reserved for operator use in the PLMN 1 changes to not reserved, and the state of the first cell reserved for operator use in the PLMN 2 changes to not reserved, the network management device sends the second message to the second access network device, where the reserved state of the first cell in the PLMN 1 that is carried in the second message is not reserved, and the reserved state of the first cell in the PLMN 2 that is carried in the second message is not reserved.

Optionally, the second message carries a changed reserved state of the first cell in the PLMN, and an unchanged reserved state of the first cell in the PLMN may not be carried.

For example, it is assumed that the first cell supports a PLMN 1 and a PLMN 2. A reserved state of the first cell in the PLMN 1 that is carried in the first message is reserved, and a reserved state of the first cell in the PLMN 2 that is carried in the first message is reserved. If the state of the first cell reserved for operator use in the PLMN 1 changes to not reserved, and the state of the first cell reserved for operator use in the PLMN 2 does not change, the network management device sends the second message to the second access network device, where the reserved state of the first cell in the PLMN 1 that is carried in the second message is not reserved.

Optionally, the second message carries latest reserved states of the first cell in all PLMNs.

For example, it is assumed that the first cell supports a PLMN 1 and a PLMN 2. A reserved state of the first cell in the PLMN 1 that is carried in the first message is reserved, and a reserved state of the first cell in the PLMN 2 that is carried in the first message is reserved. If the state of the first cell reserved for operator use in the PLMN 1 changes to not reserved, and the state of the first cell reserved for operator use in the PLMN 2 does not change, the network management device sends the second message to the second access network device, where the reserved state of the first cell in the PLMN 1 that is carried in the second message is not reserved, and the reserved state of the first cell in the PLMN 2 that is carried in the second message is reserved.

In a possible embodiment, the first access network device sends a third message to the network management device when the state of the first cell reserved for operator use at the granularity of a PLMN changes, where the third message carries the updated state of the first cell reserved for operator use at the granularity of a PLMN. Correspondingly, the network management device may further receive the third message. After receiving the third message, the network management device sends the second message to the second access network device based on the third message.

Optionally, the third message carries the changed reserved state of the first cell in the PLMN, and the unchanged reserved state of the first cell in the PLMN may not be carried. Optionally, the third message carries latest reserved states of the first cell in all PLMNs.

In another possible embodiment, step 702 may not be performed.

In another possible embodiment, the second access network device may alternatively actively obtain, from the network management device based on a requirement of the second access network device, the cell reserved for operator use of the first access network device at the granularity of a PLMN. For example, the second access network device may alternatively send a fourth message to the network management device, where the fourth message is used to request the cell reserved for operator use. Correspondingly, the network management device may receive the fourth message. After receiving the fourth message, the network management device sends the first message to the second access network device based on the fourth message.

It can be learned that, according to the method described in FIG. 7, when the cell reserved for operator use of the first access network device at the granularity of a PLMN changes, the network management device may dynamically notify the second access network device of the change. This helps reduce manual maintenance.

This application provides a communication apparatus, which may be configured to implement a function of the first access network device, the second access network device, or the network management device. The communication apparatus may be the first access network device, the second access network device, or the network management device. The communication apparatus includes modules or units that are in a one-to-one correspondence with the methods/operations/steps/actions performed by the first access network device, the second access network device, or the network management device in the foregoing method embodiments. The unit may be implemented by a hardware circuit, software, or a combination of a hardware circuit and software. FIG. 8 is a diagram of a structure of a communication apparatus 800 according to an embodiment of this application. The communication apparatus 800 may include an interface unit 801 and a processing unit 802. Specifically, the processing unit 802 is configured to process signaling and/or data. The signaling and/or data may be data received by the interface unit 801, and processed signaling and/or data may also be sent by the interface unit 801.

In an implementation, the communication apparatus 800 is a second access network device.

The interface unit 801 is configured to receive a first message sent by a first access network device, where the first message carries a state of a first cell reserved for operator use at a granularity of a public land mobile network PLMN, and the first cell is a cell of the first access network device.

In a possible embodiment, that the interface unit 801 receives the first message sent by the first access network device includes:
the interface unit 801 receives, through an X2/Xn link/a private link, the first message sent by the first access network device.

In a possible embodiment, before the interface unit 801 receives the first message, the interface unit 801 may further send a second message to the first access network device, where the second message is used to request a cell reserved for operator use.

In a possible embodiment, after the interface unit 801 receives the first message sent by the first access network device, the interface unit 801 may further receive a third message sent by the first access network device, where the third message carries an updated state of the first cell reserved for operator use at the granularity of a PLMN.

In a possible embodiment, the first message is one of the following messages: an X2 setup request message and an Xn setup request message, and the third message is one of the following messages: an ENB configuration update message and an NG-RAN node configuration update message.

In a possible embodiment, the processing unit 802 is configured to perform cell shutdown based on the state of the first cell reserved for operator use at the granularity of a PLMN.

In a possible embodiment, the processing unit 802 is configured to perform cell handover on a terminal based on the state of the first cell reserved for operator use at the granularity of a PLMN.

In a possible embodiment, the processing unit 802 is configured to determine, based on the state of the first cell reserved for operator use at the granularity of a PLMN, whether to add a carrier of the first cell as a secondary component carrier SCC.

In an implementation, the communication apparatus 800 is a first access network device.

The interface unit 801 is configured to send a first message to a second access network device, where the first message carries a state of a first cell reserved for operator use at a granularity of a public land mobile network PLMN, and the first cell is a cell of the first access network device.

In a possible embodiment, that the interface unit 801 sends the first message to the second access network device includes:
the interface unit 801 sends the first message to the second access network device through an X2/Xn link/a private link.

In a possible embodiment, before the interface unit 801 sends the first message to the second access network device, the interface unit 801 may further receive a second message sent by the second access network device, where the second message is used to request a cell reserved for operator use.

In a possible embodiment, after sending the first message to the second access network device, the interface unit 801 may further send a third message to the second access network device when the state of the first cell reserved for operator use at the granularity of a PLMN changes, where the third message carries an updated state of the first cell reserved for operator use at the granularity of a PLMN.

In a possible embodiment, the first message is one of the following messages: an X2 setup request message and an Xn setup request message, and the third message is one of the following messages: an ENB configuration update message and an NG-RAN node configuration update message.

In an implementation, the communication apparatus 800 is a second access network device.

The interface unit 801 is configured to receive a first message sent by a network management device, where the first message carries a state of a first cell reserved for operator use at a granularity of a PLMN, and the first cell is a cell of a first access network device.

The interface unit 801 is further configured to receive a second message sent by the network management device, where the second message carries an updated state of the first cell reserved for operator use at the granularity of a PLMN.

In a possible embodiment, the processing unit 802 is configured to perform cell shutdown based on the state of the first cell reserved for operator use at the granularity of a PLMN.

In a possible embodiment, the processing unit 802 is configured to perform cell handover on a terminal based on the state of the first cell reserved for operator use at the granularity of a PLMN.

In a possible embodiment, the processing unit 802 is configured to determine, based on the state of the first cell reserved for operator use at the granularity of a PLMN, whether to add a carrier of the first cell as a secondary component carrier SCC.

In an implementation, the communication apparatus 800 is a network management device.

The interface unit 801 is configured to send a first message to a second access network device, where the first message carries a state of a first cell reserved for operator use at a granularity of a PLMN, and the first cell is a cell of a first access network device.

The interface unit 801 is further configured to send a second message to the second access network device when the state of the first cell reserved for operator use at the granularity of a PLMN changes, where the second message carries an updated state of the first cell reserved for operator use at the granularity of a PLMN.

In a possible embodiment, before sending the second message to the second access network device, the interface unit 801 is further configured to receive a third message sent by the first access network device, where the third message carries the updated state of the first cell reserved for operator use at the granularity of a PLMN.

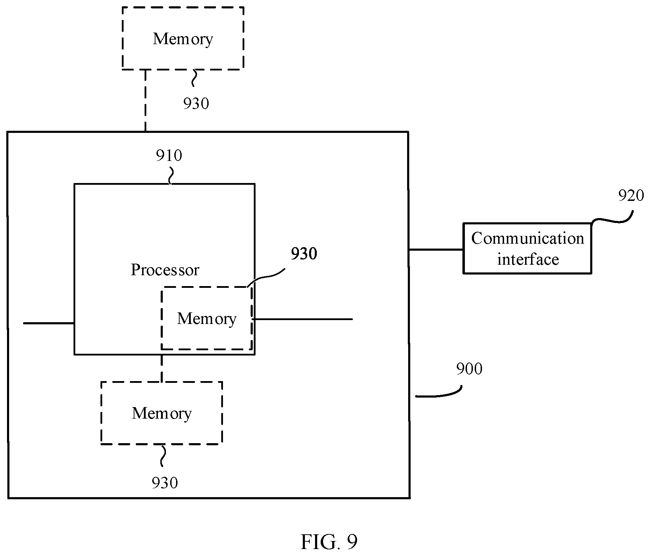

FIG. 9 shows a communication apparatus 900 according to an embodiment of this application, to implement a function of the first access network device, the second access network device, or the network management device. The apparatus may be a communication device or an apparatus used in the communication device. The communication device may be the first access network device, the second access network device, or the network management device. The apparatus used in the communication device may be a chip system or a chip in the communication device. The chip system may include a chip, or may include a chip and another discrete device.

The communication apparatus 900 includes at least one processor 910, configured to implement a processing function of a device (for example, the first access network device, the second access network device, or the network management device) in the methods provided in embodiments of this application. The communication apparatus 900 may further include a communication interface 920, configured to implement receiving and sending operations of the device (for example, the first access network device, the second access network device, or the network management device) in the methods provided in embodiments of this application. In this embodiment of this application, the communication interface may be a transceiver, a circuit, a bus, a module, or another type of communication interface, and is configured to communicate with another device through a transmission medium. For example, the communication interface 920 is used by an apparatus in the communication apparatus 900 to communicate with another device. The processor 910 receives and sends data through the communication interface 920, and is configured to implement the methods in the foregoing method embodiments.

The communication apparatus 900 may further include at least one memory 930, configured to store program instructions and/or data. The memory 930 is coupled to the processor 910. The coupling in this embodiment of this application is an indirect coupling or a communication connection between apparatuses, units, or modules, may be in an electrical form, a mechanical form, or another form, and is used for information exchange between the apparatuses, the units, and the modules. The processor 910 may cooperate with the memory 930. The processor 910 may execute the program instructions stored in the memory 930. At least one of the at least one memory may be included in the processor.

A specific connection medium between the communication interface 920, the processor 910, and the memory 930 is not limited in embodiments of this application. In this embodiment of this application, in FIG. 9, the memory 930, the processor 910, and the communication interface 920 are connected through a bus. The bus is indicated by using a bold line in FIG. 9. A connection manner between other components is merely an example for description, and is not limited thereto. The bus may be classified into an address bus, a data bus, a control bus, and the like. For ease of representation, only one thick line is used to represent the bus in FIG. 9, but this does not indicate that there is only one bus or only one type of bus.

When the communication apparatus 900 is specifically used as an apparatus of the device (for example, the first access network device, the second access network device, or the network management device), for example, when the communication apparatus 900 is specifically a chip or a chip system, the communication interface 920 may output or receive a baseband signal. When the communication apparatus 900 is specifically the device (for example, the first access network device, the second access network device, or the network management device), the communication interface 920 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by a combination of hardware and software modules in the processor.

It should be noted that the communication interface 920 may be configured to perform a function of the interface unit 801, and the processor 910 may be configured to perform a function of the processing unit 802. Details are not described herein again.

When the communication apparatus is a chip used in a terminal, the chip in the terminal implements a function of the terminal in the foregoing method embodiments. The chip in the terminal receives information from another network element, or the chip in the terminal sends information to another network element.

When the communication apparatus is a chip used in an access network device, the chip in the access network device implements a function of the access network device in the foregoing method embodiments. The chip in the access network device receives information from another network element, or the chip in the access network device sends information to another network element.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in an access network device or a terminal. Certainly, the processor and the storage medium may alternatively exist in a terminal or an access network device as discrete components.

All or a part of the foregoing embodiments may be implemented by using software, hardware, firmware, or any combination thereof. When software is used for implementation, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium that can be accessed by the computer, or a data storage device, for example, a server, integrating one or more usable media. The usable medium may be a magnetic medium, for example, a floppy disk, a hard disk, or a magnetic tape; may be an optical medium, for example, a DVD; or may be a semiconductor medium, for example, a solid state disk (solid state disk, SSD).

In embodiments of this application, unless otherwise stated or there is a logic conflict, terms and/or descriptions of different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the method performed by the first access network device, the second access network device, or the network management device in the foregoing method embodiments is implemented.

An embodiment of this application further provides a computer program product. The computer program product includes a computer program. When the computer program is executed, the method performed by the first access network device, the second access network device, or the network management device in the foregoing method embodiments is implemented.

An embodiment of this application further provides a communication system. The communication system includes a first access network device and a second access network device, or includes a second access network device and a network management device. The first access network device is configured to perform the method performed by the first access network device in the foregoing method embodiments. The second access network device is configured to perform the method performed by the second access network device in the foregoing method embodiments. The network management device is configured to perform the method performed by the network management device in the foregoing method embodiments.

It should be noted that, for brief description, the foregoing method embodiments are represented as a series of actions. However, persons skilled in the art should appreciate that this application is not limited to the described sequence of the actions, because according to this application, some steps may be performed in another sequence or simultaneously. It should be further appreciated by persons skilled in the art that embodiments described in this specification all belong to example embodiments, and the related actions and modules are not necessarily required by this application.

The descriptions of the embodiments provided in this application may refer to each other, and the descriptions of the embodiments have different focuses. For a part not described in detail in an embodiment, refer to related descriptions of another embodiment. For ease of description and brevity, for functions of the apparatuses and devices provided in embodiments of this application and performed steps, refer to the related descriptions of the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to a part or all technical features thereof, without departing from the scope of the technical solutions of embodiments of this application.

## Claims

1. A cell reserved for operator use transmission method, wherein the method comprises:
receiving, by a second access network device, a first message sent by a first access network device, wherein the first message carries a state of a first cell reserved for operator use at a granularity of a public land mobile network PLMN, and the first cell is a cell of the first access network device.

2. The method according to claim 1, wherein receiving, by the second access network device, the first message sent by the first access network device comprises:
receiving, by the second access network device through an X2/Xn link/a private link, the first message sent by the first access network device.

3. The method according to claim 1 or 2, wherein before receiving, by the second access network device, the first message, the method further comprises:
sending, by the second access network device, a second message to the first access network device, wherein the second message is used to request a cell reserved for operator use.

4. The method according to any one of claims 1 to 3, wherein after receiving, by the second access network device, the first message sent by the first access network device, the method further comprises:
receiving, by the second access network device, a third message sent by the first access network device, wherein the third message carries an updated state of the first cell reserved for operator use at the granularity of a PLMN.

5. The method according to claim 4, wherein the first message is one of the following messages: an X2 setup request message and an Xn setup request message, and the third message is one of the following messages: an evolved NodeB ENB configuration update message and a next generation access network NG-RAN node configuration update message.

6. The method according to any one of claims 1 to 5, wherein the method further comprises:
performing, by the second access network device, cell shutdown based on the state of the first cell reserved for operator use at the granularity of a PLMN.

7. The method according to any one of claims 1 to 6, wherein the method further comprises:
performing, by the second access network device, cell handover on a terminal based on the state of the first cell reserved for operator use at the granularity of a PLMN.

8. The method according to any one of claims 1 to 7, wherein the method further comprises:
determining, by the second access network device based on the state of the first cell reserved for operator use at the granularity of a PLMN, whether to add a carrier of the first cell as a secondary component carrier SCC.

9. A cell reserved for operator use transmission method, wherein the method comprises:
sending, by a first access network device, a first message to a second access network device, wherein the first message carries a state of a first cell reserved for operator use at a granularity of a public land mobile network PLMN, and the first cell is a cell of the first access network device.

10. The method according to claim 9, wherein sending, by the first access network device, the first message to the second access network device comprises:
sending, by the first access network device, the first message to the second access network device through an X2/Xn link/a private link.

11. The method according to claim 9 or 10, wherein before sending, by the first access network device, the first message to the second access network device, the method further comprises:
receiving, by the first access network device, a second message sent by the second access network device, wherein the second message is used to request a cell reserved for operator use.

12. The method according to any one of claims 9 to 11, wherein after sending, by the first access network device, the first message to the second access network device, the method further comprises:
sending, by the first access network device, a third message to the second access network device when the state of the first cell reserved for operator use at the granularity of a PLMN changes, wherein the third message carries an updated state of the first cell reserved for operator use at the granularity of a PLMN.

13. The method according to claim 12, wherein the first message is one of the following messages: an X2 setup request message and an Xn setup request message, and the third message is one of the following messages: an evolved NodeB ENB configuration update message and a next generation access network NG-RAN node configuration update message.

14. A communication apparatus, comprising a unit configured to perform the method according to any one of claims 1 to 8, or comprising a unit configured to perform the method according to any one of claims 9 to 13.

15. A communication apparatus, comprising a processor and a memory, wherein the processor is coupled to the memory, and the processor is configured to implement the method according to any one of claims 1 to 8, or the processor is configured to implement the method according to any one of claims 9 to 13.

16. A chip, comprising a processor and an interface, wherein the processor is coupled to the interface, the interface is configured to receive or output a signal, and the processor is configured to execute code instructions, to perform the method according to any one of claims 1 to 8, or to perform the method according to any one of claims 9 to 13.

17. A computer-readable storage medium, wherein the computer-readable storage medium stores computer-executable instructions, and when the computer-executable instructions are invoked by the computer, the computer is enabled to perform the method according to any one of claims 1 to 8, or the computer is enabled to perform the method according to any one of claims 9 to 13.

18. A computer program product, wherein when a computer reads and executes the computer program product, the method according to any one of claims 1 to 8 or claims 9 to 13 is performed.

19. A communication system, comprising a first access network device and a second access network device, wherein the second access network device is configured to perform the method according to any one of claims 1 to 8, and the first access network device is configured to perform the method according to any one of claims 9 to 13.
